# EUROPEAN PATENT SPECIFICATION

(11) **EP 1 794 827 B1**
(45) Date of publication and mention of the grant of the patent: **14.10.2009**
(21) Application number: 05797886.8
(22) Date of filing: 22.09.2005
(51) Int. Cl.: H01M 4/26, C01G 9/00

(54) **METHODS FOR FABRICATING CALCIUM ZINCATE FOR NEGATIVE ELECTRODES**
VERFAHREN ZUR HERSTELLUNG VON CALCIUMZINKAT FÜR NEGATIV-ELEKTRODEN
PROCEDE DE FABRICATION DE ZINCATE DE CALCIUM POUR ELECTRODES NEGATIVES

(30) Priority: 24.09.2004 CN 200410051677
(43) Date of publication of application: 13.06.2007
(73) Proprietor: Byd Company Limited, Shenzhen City, Guangdong 518119 (CN)
(72) Inventor: ZHU, Zhijian, BYD Company Limited, Shenzhen, Guangdong 518119 (CN)
(74) Representative: Copsey, Timothy Graham
(86) International application number: PCT/CN2005/001531
(87) International publication number: WO 2006/032208

(56) References cited:
- CN-A- 1 462 083
- CN-A- 1 482 698
- CN-A- 1 521 876
- JP-A- 08 213 011
- RAM A. SHARMA: "Physico-Chemical Properties of Calcium Zincate" J. ELECTROCHEM. SOC., vol. 133, no. 11, 1986, pages 2215-2219, XP002452665
- J. FALBE (ED.), M. REGITZ (ED.): "Römpp Chemie Lexikon, Band 3 (H-L)" 1995, THIEME VERLAG , STUTTGART NEW YORK , XP002452668 * page 1955, paragraph IMPFEN *
- T.-C. LIN, M.Y.A. MOLLAH, R.K. VEMPATI, D.L. COCKE: "Synthesis and Characterization of Calcium Hydroxyzincate using X-ray Diffraction, FT-IR Spectroscopy and Scanning Force Microskopy" CHEM. MATER., vol. 7, no. 10, 1995, pages 1974-1978, XP002452666
- X-M. ZHU, H-X. YANG, X-P. AI, J-X. YU AND Y-L. CAO: "Structural and electrochemical charaterization of mechanochemically synthesized calcium zincate as rechargebale anodic materials" J. APPL. ELECTROCHEM., vol. 33, no. 7, 2003, pages 607-612, XP002452667
- DATABASE WPI Week 200478 Derwent Publications Ltd., London, GB; AN 2004-785966 XP002452734 & CN 1 521 876 A (JIANGSU HAISIDA GROUP CO LTD) 18 August 2004 (2004-08-18)

## Description

### Field of Invention

This invention relates to fabrication methods for electrodes of alkaline storage batteries. Particularly, it relates to the fabrication methods for calcium zincate, an active material for negative electrodes of alkaline storage batteries.

### Background

Storage batteries with zinc (Zn) as the negative electrode include the zinc nickel battery, zinc silver battery, zinc air battery and zinc manganese dioxide battery. The common disadvantage of these storage batteries is their short cycling life. The product of zinc during discharge has a relatively high solubility in the alkaline electrolyte of the battery. Therefore, during the battery's charging and discharging process, the zinc from the electrode repeatedly dissolves in the electrolyte solution and then precipitates back onto the electrode. However, the precipitation of Zn does not occur at the same location as where Zn was dissolved. Since the current density is not uniformly distributed on the zinc electrode, during each charge-discharge process, at the edges of the electrode, the quantity of Zn that is dissolved is greater than the Zn that is precipitated. At the center of the electrode, this phenomenon is reversed. Therefore, during the charge-discharge process, the active material of the electrode moves toward the center of the electrode from the edges resulting in the redistribution of zinc on the electrode and leading to the "shape change" of the zinc electrode. This shape change will gradually decrease the actual surface area, thus reducing a battery's capacity and shortening its cycling life.

To eliminate or reduce this shape change of the zinc electrode, researchers have been looking at ways to limit the migration of the product of zinc during discharge, to decrease the solubility of zinc product during discharge in the electrolyte solution; and to alter the unequal distribution of current density on the electrodes.

In United States' Patents 3516862 and 5460899, calcium hydroxide is added to the zinc negative electrode such that the product of zinc during discharge is the insoluble calcium zincate, Ca(OH)₂·2 Zn(OH)₂·2H₂O, also represented by the formula Ca[Zn(OH)₃]₂ · 2H₂O. This results in the precipitation of the product of zinc during discharge and eliminates the shape change of zinc electrode.

Two different groups of researchers have reported using calcium zincate as the active material for the zinc electrodes. In JingxianYu, HanxiYang et al., Fabrication of Calcium Zincate and Research on its Electrochemistry Properties, Battery, Vol. 31, No. 2, Apr., 2001, the authors used calcium zincate as the active material for negative electrodes of zinc nickel batteries and reported that the calcium zincate has a distinctively better cycling property in alkaline solution than a mixture of calcium hydroxide and zinc oxide. United States' Patent 5863676 also discloses the use of calcium zincate as an active material to fabricate zinc electrodes and the fabrication method for calcium zincate. Both methods for fabricating calcium zincate are similar. They add stochiometric quantities of Ca(OH)₂ and ZnO to large quantities of potassium hydroxide solution, stir for between 48 hours to 72 hours at 40°C and 80°C, then rinse with de-ionized water, and dry with heat. The formula for the reaction is:

Ca(OH)₂ + 2 ZnO + 4H₂O = Ca[Zn(OH)₃]₂·2H₂O.

However, these fabrication methods are not well adapted for use in mass production as stirring for two to three days consumes a large quantity of energy and results in low labor productivity.

Patent CN1397498A discloses the use of solid state synthesis to fabricate calcium zincate that can shorten the time needed for the fabrication. The chemical precipitation method proposed by the present inventor for fabricating calcium zincate in Patent CN1467868A can also shorten the fabrication time and reduce the use of raw material. However, the calcium zincate fabricated using the above methods, when used as the active material for negative electrodes of batteries, produces batteries with relatively inclined discharge platform and a low discharge capacity during high current discharge.

Recently developed cordless electric tools demand increases in capacity and power. Batteries need to have less fluctuation in power during use and a large electric capacity for high current and high power discharges. Therefore, the calcium zincate synthesized from earlier methods cannot reach or meet the use requirements of the cordless electric tools. In physico-chemical properties of calcium zincate, R.A. Sharma, J .Electrochem. Soc. 1986, 133 (11), 2215-2219, there is disclosed a method of preparing calcium zincate by adding calcium hydroxide in solution, which is a calcium salt solution, to zinc oxide in solution, which is a zinc salt solution, to a potassium hydroxide solution. The calcium zincate was prepared as follows: 10g of ZnO of 99.8% purity (100g) was dissolved in 100ml of 20%wt. KOH solution. This amount is equal to a ZnO concentration of 20%wt. KOH solution in equilibrium with calcium zincate. Calcium hydroxide of 98% purity (100g) was slowly added to the KOH solution which was continuously stirred. Water (146g) equal to that which was expected to be present in calcium zincate containing 100g Ca (OH)₂ was added to the KOH solution. Then the calculated amount of ZnO (219.7g) was slowly added to the solution. The solution was stirred for the next 24h. The calcium zincate was then allowed to settle and the liquid above it was decanted. The calcium zincate was washed with water until the solution pH became about 7 and then dried at 325K overnight. The calcium zincate prepared in this manner was a very fine crystalline powder.
Römpp Chemie Lexikon, 1995, vol. 3 (H-L), page 1955 Section "Impfen" discloses that it is known to inoculate a chemical solution with crystals of the substance which is dissolved so that crystallization or the formation of a deposit from the solution occurs more rapidly.
Patent CN1524876 A discloses a process for making calcium zincate by adding calcium hydroxide and ZnO in stoichiometric amounts to a KOH-solution at a temperature of 70-100°C, stirring for more than 72h, followed by ageing at 70-95°C for over 60h, cooling, filtering, washing, drying and grinding followed by screening the calcium zincate obtained at 300 mesh. It is clear from this document that an alkaline aqueous solution comprising zincate anions and calcium cations is obtained. However, it appears, that the calcium zincate particles obtained by this process are so large, that a size reduction process (grinding and screening) is then necessary.
Patent CN1482698 A discloses a wet grinding process for producing calcium zincate by grinding a mixture of CaO, calcium hydroxide or a calcium salt and ZnO or a zinc salt in KOH or an aqueous grinding medium. However, the combination of an aqueous metal salt solution in order to obtain a mixed metal oxide (calcium zincate can be seen as a mixed metal oxide) by precipitation through addition of an alkaline solution is a well-known technique to the person skilled in the art (co-precipitation method).

Due to the limitations of the prior art, it is desirable to have novel methods of for fabricating calcium zincate that can be used as the active material for negative electrodes of alkaline storage batteries such that the batteries have a stable discharge platform and power output and a large capacity for high power and large current discharges.

### Summary of Invention

An object or this invention is to provide methods for fabricating calcium zincate with small granule diameters such that batteries with calcium zincate as the active material for the zinc electrodes have a stable discharge platform and power output, and a large capacity for high power and large current discharges.

Briefly, this invention discloses methods for fabricating calcium zincate, an active material for negative electrodes of alkaline storage batteries. These fabrication methods are nucleation methods that use calcium zincate with small granular diameter as seeds for the fabrication of calcium zincate. The method in accordance with the invention comprises the steps of adding calcium zincate seeds to an alkaline solution; and mixing a calcium salt solution and a zinc salt solution with said alkaline solution to form calcium zincate, wherein the calcium salt in the calcium salt solution and the zinc salt in the zinc salt solution are water soluble, the anions of the calcium salt in the calcium salt solution do not form a precipitate with the zinc ions in the zinc salt solution and the anions of the zinc salt solution do not form a precipitate with the calcium ions in the calcium salt solution."

An advantage of the invention is that the calcium zincate fabricated by the methods of this invention has small granule diameters.

Another advantage of the invention is that batteries using the calcium zincate fabricated by the method of this invention as the active material for the zinc electrodes have a stable discharge platform and power output, and a large discharge capacity for high power and large current discharges.

Another advantage of this invention is that the method lasts a short time, and consumes less energy and raw materials.

Another advantage of this invention is that the fabrication methods of this invention are highly productive when implemented for mass production.

### Description of Drawings

The foregoing and other objects, aspects and advantages of the invention will be better understood from the following detailed description of preferred embodiments of this invention when taken in conjunction with the accompanying drawings in which:

Figure 1 shows an XRD image of an embodiment produced using a fabrication method of this invention.

Figure 2 is a SEM micrograph of an embodiment produced using a fabrication method of this invention.

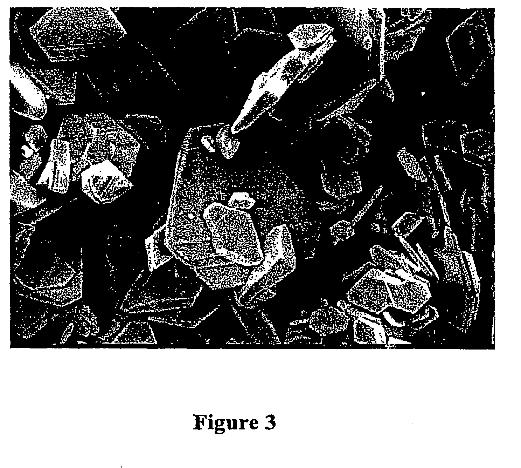

Figure 3 is a SEM micrograph of calcium zincate fabricated using a method by the inventor disclosed in patent CN1467868A.

Figure 4 shows a discharge curve of a zinc electrode with calcium zincate fabricated by a nucleation method of this invention and a discharge curve of a zinc electrode with calcium zincate fabricated with a solid state synthesis method.

Figure 5 shows a second discharge curve of a zinc electrode with calcium zincate fabricated by a nucleation method of this invention and a second discharge curve of a zinc electrode with calcium zincate fabricated by a solid state synthesis method.

Figure 6 shows a third discharge curve of a zinc electrode with calcium zincate fabricated by a nucleation method of this invention and a third discharge curve of a zinc electrode with calcium zincate fabricated by a solid state synthesis method.

Figure 7 is a distribution of the granule size, i.e., the granule diameter, of calcium zincate used as seeds in one embodiment of this invention.

Figure 8 is a distribution of the granule size, i.e., the granule diameter, of the calcium zincate fabricated using a method of this invention.

Figure 9 is a distribution of the grain size of the calcium zincate fabricated by a method of the inventor disclosed in patent (CN1467868A).

### Detailed Description of the Preferred Embodiments

Experimental results show that batteries using calcium zincate with smaller average granule diameters have a more stable discharge platform and larger discharge capacity for high current discharges than the batteries using calcium zincate with larger average granule diameters. The fabrication methods of this invention are nucleation methods that use calcium zincate with small granule diameters as seeds, i.e., nucleating crystals, to fabricate calcium zincate with short fabrication times. The resulting fabricated calcium zincate has small average granule diameters. The chemical reaction for the production of calcium zincate using the presently preferred methods are described by the following equations:

Ca²⁺+ 2Zn²⁺ + 6OH^{~} = Ca(OH)₂ + 2Zn(OH)₂

Ca(OH)₂ + 2Zn(OH)₂ + 2H₂O = Ca(OH)₂ - 2Zn(OH)₂ - 2H₂O

The methods for fabricating said calcium zincate includes the following steps: adding calcium zincate crystals as seeds (calcium zincate seeds) to an alkaline solution; mixing a calcium salt solution and a zinc salt solution uniformly; mixing by stirring said alkaline solution comprising the calcium zincate seeds continuously while adding the solution mixture of calcium salt solution and zinc salt solution to the alkaline solution to obtain said fabricated calcium zincate.

The calcium salt in said calcium salt solution is hydro-soluble and the zinc salt in said zinc salt solution is also hydro-soluble. The anions of the calcium salts in said calcium salt solution do not form a precipitate with the zinc ions in the zinc salt solution. In addition, the anions of the zinc salt solution do not form a precipitate with the calcium ion in the calcium salt solution. Therefore, zinc chloride, ZnCl₂, zinc nitrate, Zn(NO₃)₂, zinc acetate, and Zn(AC)₂, can be used as the zinc salt in said zinc salt solution. However, zinc sulfate, ZnSO₄, cannot be used as the anions of the sulfate radical, SO₄²⁻ as the zinc sulfate can form the precipitate calcium sulfate, CaSO₄, with the calcium ions, Ca²⁺, from the calcium salt. Similarly, calcium nitrate, Ca(NO₃)₂, calcium chloride, CaCl₂, calcium acetate, and Ca(AC)₂ can be used as the calcium salt. However, calcium sulfide, CaS cannot be used as the sulfide ions, S²⁻, of calcium sulfide can form a precipitate of zinc sulfide, ZnS with the zinc ions, Zn²⁺, in the zinc salt. The preferred molar ratio of the calcium in said calcium salt to said zinc in said zinc salt, Ca:Zn, is 1 : 1.5 - 5. The optimum molar ratio of Ca: Zn is 1 :2. Although increasing the amount of Zn used to above the optimum ratio does not affect the reaction to form calcium zincate, it is a waste of raw materials and can affect the purity of the final product.

The reaction container where the calcium zincate is formed can be either open or sealed. Preferably, the solution mixture of the calcium salt solution and the zinc salt solution should be completely added to the alkaline solution in between 10 minutes and 60 minutes. In addition, the solution mixture of the calcium salt solution, the zinc salt solution, and the alkaline solution which react to form the calcium zincate suspension may be maintained at between 20°C and 95°C.

Sodium hydroxide solution, potassium hydroxide solution, or, a mixture of the two can be used as the alkaline solution. In embodiments, the preferred molar quantity of hydroxyl (OH⁻) of said alkaline solution is 5.5 to 7.5 times of the molar quantity of the calcium in said calcium salt. The optimum molar ratio of the hydroxyl (OH⁻) radical and the calcium salt is 6. Although too much calcium does not affect the reaction to form the calcium zincate, it is a wasteful use of raw materials.

The preferred granule diameter of said calcium zincate seeds is between 0.1 µm and 30µm. Optimally, the granule diameter is between 1 µm and 20 µm. Preferably, the molar quantity of calcium zincate crystals used as seeds is between 0.5% and 1.5% of the molar quantity of calcium in the solution mixture of calcium salt solution and zinc salt solution. The larger the amount of calcium zincate seeds with the same average diameter is used for the nucleation, the faster the crystallization rate for the fabrication of the calcium zincate and the smaller the average diameter of the fabricated calcium zincate. For the same amount of fabricated calcium zincate, with more calcium zincate seeds acting as nucleating crystals, the average coating of the fabricated calcium zincate on each nucleating seed is less, resulting in a smaller granular size. However, the calcium zincate seeds have to be fabricated independently for use with this method. If the amount of calcium zincate seeds used is high, this nucleation method becomes economically inefficient. If the ratio of the calcium zincate seeds to the amount of calcium salt in said solution mixture is less than 0.5%, then there are insufficient nucleating crystals and the rate of fabrication of the calcium zincate is lowered and the granular size of the fabricated calcium zincate is increased. Therefore, overall, the optimum molar quantity of calcium zincate seeds is between 0.5% and 1.5% of the molar quantity of calcium in said calcium salt solution.

The following embodiments further describe this invention.

### EMBODIMENT 1

Methods for fabricating calcium zincate in this embodiment include the following steps:
formulating a 500 ml solution of NaOH using 3 mol of NaOH and placing the formulated NaOH to a round bottom flask with a sealed stirring apparatus;
adding 0.75g of calcium zincate crystals made by BYD Ltd. with product number is QST-5 to said NaOH solution where the average granule diameter of said crystals is 10µm;
while continuously stirring, heating the NaOH solution to 80°C and then maintaining this temperature;
formulating a 200 ml solution of CaCl₂ solution with 0.5mol of CaCl₂;
formulating a 200 ml solution of ZnCl₂ solution with 1 mol of ZnCl₂;
mixing uniformly the formulated the CaCl₂ solution and the ZnCl₂ solution to form a solution mixture;
while continuously stirring the NaOH solution, adding the solution mixture completely to the NaOH solution within 10 minutes to form a suspension;
cooling;
vacuum-filtering the suspension; and
rinsing and drying at a temperature lower than 90°C the filtered product to obtain the fabricated calcium zincate.

### EMBODIMENT 2

Methods for fabricating calcium zincate in this embodiment include the following steps:
formulating a 500 ml solution of NaOH using 3.25 mol of NaOH and placing the formulated NaOH to a round bottom flask with a sealed stirring apparatus;
adding 1.5g of calcium zincate crystals made by BYD Ltd. with product number is QST-5 to said NaOH solution where the average granule diameter of said crystals is 10µm;
while continuously stirring, heating the NaOH solution to 80°C and then maintaining this temperature;
formulating a 200 ml solution of CaCl₂ solution with 0.5ml of CaCl₂;
formulating a 200 ml solution of ZnCl₂ solution with 1mol of ZnCl₂;
mixing uniformly the formulated the CaCl₂ solution and the ZnCl₂ solution to form a solution mixture;
while continuously stirring the NaOH solution, adding the solution mixture completely to the NaOH solution within 30 minutes to form a suspension;
cooling;
vacuum-filtering the suspension; and
rinsing and drying at a temperature lower than 90°C the filtered product to obtain the fabricated calcium zincate.

### EMBODIMENT 3

Methods for fabricating calcium zincate in this embodiment include the following steps:
formulating a 500 ml solution of NaOH using 3.5 mol of NaOH and placing the formulated NaOH to a round bottom flask with a sealed stirring apparatus;
adding 2.25g of calcium zincate crystal made by BYD Ltd. with product number is QST-5 to said NaOH solution where the average granule diameter of said crystals is 10µm;
while continuously stirring, heating the NaOH solution to 80°C and then maintaining this temperature;
formulating a 200 ml solution of CaCl₂ solution with 0.5ml of CaCl₂;
formulating a 200 ml solution of ZnCl₂ solution with 1mol of ZnCl₂;
mixing uniformly the formulated the CaCl₂ solution and the ZnCl₂ solution to form a solution mixture;
while continuously stirring the NaOH solution, adding the solution mixture completely to the NaOH solution within 60 minutes to form a suspension;
cooling;
vacuum-filtering the suspension; and
rinsing and drying at a temperature lower than 90°C the filtered product to obtain the fabricated calcium zincate.

### EMBODIMENT 4

Methods for fabricating calcium zincate in this embodiment include the following steps:
formulating a 500 ml a solution mixture of NaOH and KOH using 1.5 mol of NaOH and 1.5 mol of KOH and placing the formulated NaOH to a round bottom flask with a sealed stirring apparatus;
adding 2.25g of calcium zincate crystals made by BYD Ltd. with product number is QAT-5 to said mixture of NaOH and KOH solution where the average granule diameter of said crystals is 10µm;
while continuously stirring, heating the NaOH solution to 80°C and then maintaining this temperature;
formulating a 200 ml solution of CaCl₂ solution with 0.5mol of CaCl₂;
formulating a 200 ml solution of ZnCl₂ solution with 1 mol of ZnCl₂;
mixing uniformly the formulated the CaCl₂ solution and the ZnCl₂ solution to form a solution mixture;
while continuously stirring the NaOH and KOH solution mixture, adding the solution mixture of CaCl₂ and ZnCl₂ completely the NaOH and KOH solution mixture within 60 minutes to form a suspension;
cooling;
vacuum-filtering the suspension; and
rinsing and drying at a temperature lower than 90°C the filtered product to obtain the fabricated calcium zincate.

### Properties of the Calcium Zincate Produced

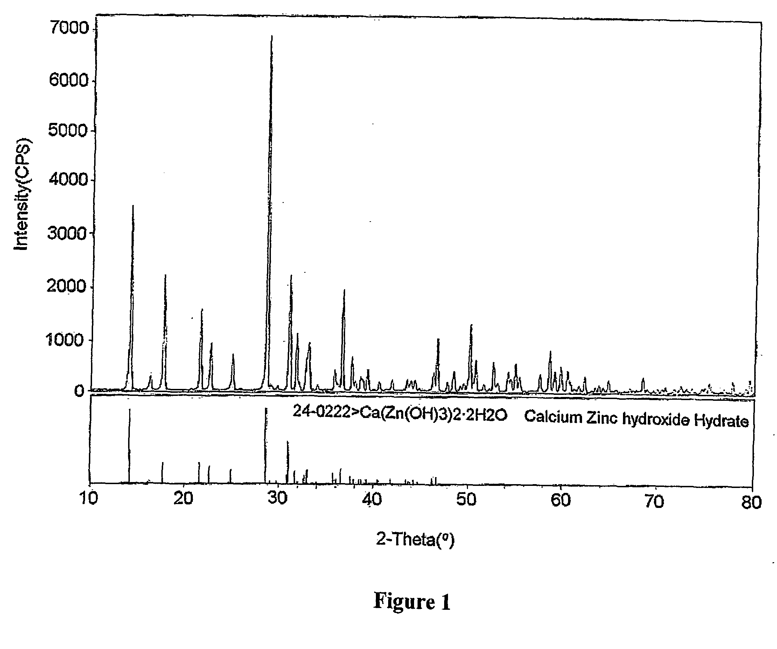

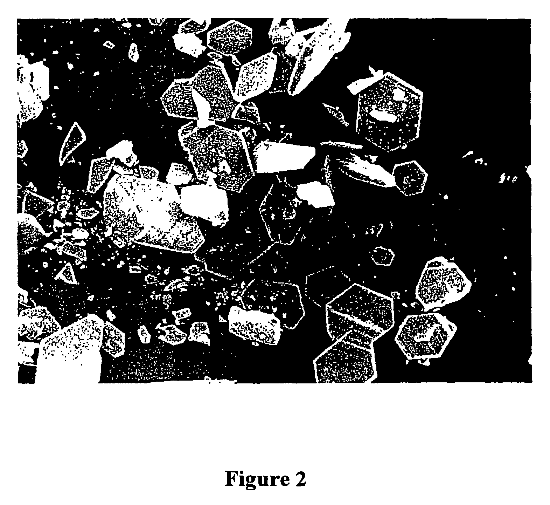

Figure 1 shows a XRD (x-ray diffraction) test of a fabricated calcium zincate fabricated by a method of this invention. The top XRD pattern in this figure is the pattern for the calcium zincate fabricated by a method of this invention while the lower XRD pattern is the standard pattern for calcium zincate (No. 24-0222). Figure 2 is the SEM micrograph of a calcium zincate fabricated by a method of this invention.

Spectral analysis and calculation reveals that the principal product of Embodiment 1, more than 90% of the total product is calcium zincate with monoclinic lattice that is represented by the formulas Ca(OH)₂·2Zn(OH)₂·2H₂O or Ca(Zn(OH)₃)₂·2H₂O. Similar analysis on Embodiment 2, 3, and 4 reveal results that are consistent with those of Embodiment 1.

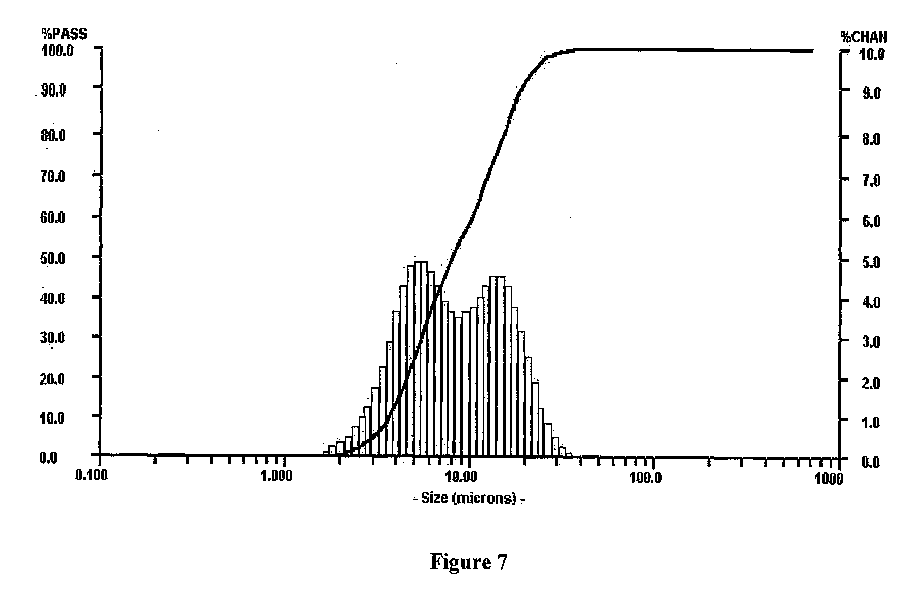

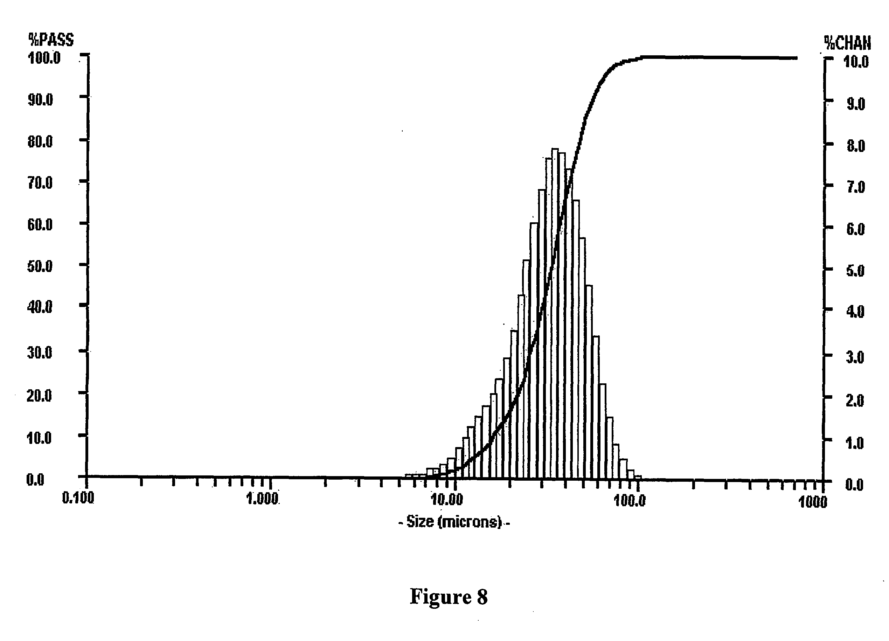

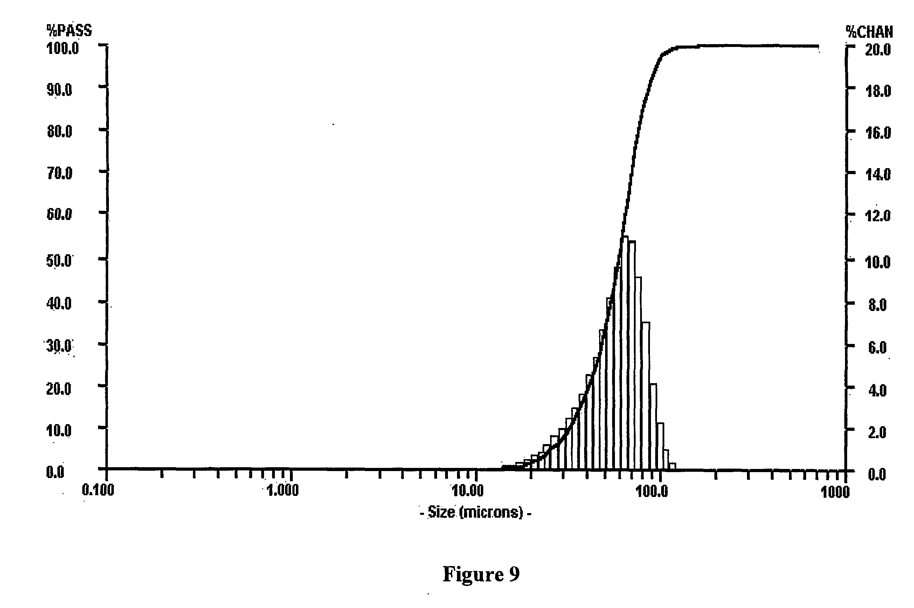

The calcium zincate fabricated in Embodiments 1 through 4 have smaller granule diameters than those fabricated using a previous method disclosed in CN1467868A, Figures 7 to 9 show distributions of the granule size, i.e., the granule diameter, of the fabricated calcium zincate. In those figures, each point on the solid black line (% pass), shows the percentage of calcium zincate that have granule diameter less than or equal to the diameter indicated in its "x" axis. The histograms in the figures (%chan v. granule size or granule diameter) show the percentage distribution of granules diameters of the fabricated calcium zincate. Figure 7 shows a distribution of the granule diameters of the calcium zincate seeds used in Embodiments 1 through 4 with an average granule diameter of 1 0µm. Figure 8 shows a distribution of the granule diameters of the calcium zincate fabricated with a method of this invention where the average granule diameter of the calcium zincate fabricated is 35 µm and the average granule diameter of the calcium zincate seeds used in the nucleation method is 10 µm. Figure 9 shows a distribution of the granule diameters of calcium zincate fabricated with a method disclosed in this inventor's patent CN 1467868A where the average granule diameter of the calcium zincate fabricated is 60 µm. The granule diameter of the calcium zincate fabricated with a method of this invention is smaller than the average granule diameter produced by previously disclosed methods of this inventor.

The reaction times needed to fabricate the calcium zincate in these embodiments are much less than methods that have been used in prior art. Comparison between Embodiment 1 and Embodiments 2, 3, and 4 shows that the more calcium zincate crystals are added as the nucleating crystals, the less reaction time is needed to produce the fabricated calcium zincate. Although continuing to increase the amount of added calcium zincate crystals can further decrease the reaction time, the cost of fabrication of the calcium zincate will also increase with the increase in the use of calcium zincate seeds.

### Properties of Zinc Electrodes

To evaluate the calcium zincate fabricated in the above embodiments, the calcium zincate fabricated by the nucleation methods of this invention and calcium zincate fabricated using a solid state synthesis method are used as the active material in zinc electrodes of alkaline batteries. The performance of the zinc electrodes are then tested and compared.

To fabricate a zinc electrode from calcium zincate, 24g of the calcium zincate is uniformly mixed using a mixing apparatus with 58g of zinc oxide, 1g of carbon black, a conducting agent, and, 5g if CdO, 3.5g of Bi₂O₃, and 2g of PbO as additives. The above mixture is then stirred with 4g of 60% polytetrofluoro-ethylene (PTFE) suspension, 16 g of 3% polyvinyl alcohol (PVA), and 10g of 3% sodium carboxy methyl cellulose(CMC) to form a viscous paste. This paste is coated onto a copper net with a plated layer of Pb, Sn or Pb-Sn alloy, dried with heat, rolled, cut, trimmed, and welded with conduction tabs to form the zinc electrode.

To test the charging and discharging properties of zinc electrode, the zinc electrode is charged with a current density of 50mA/g (around 0.1C) for 15 hours; then discharged to -1.2V (vs. HgO/Hg) with 150mA/g, 250mA/g and 500mA/g respectively.

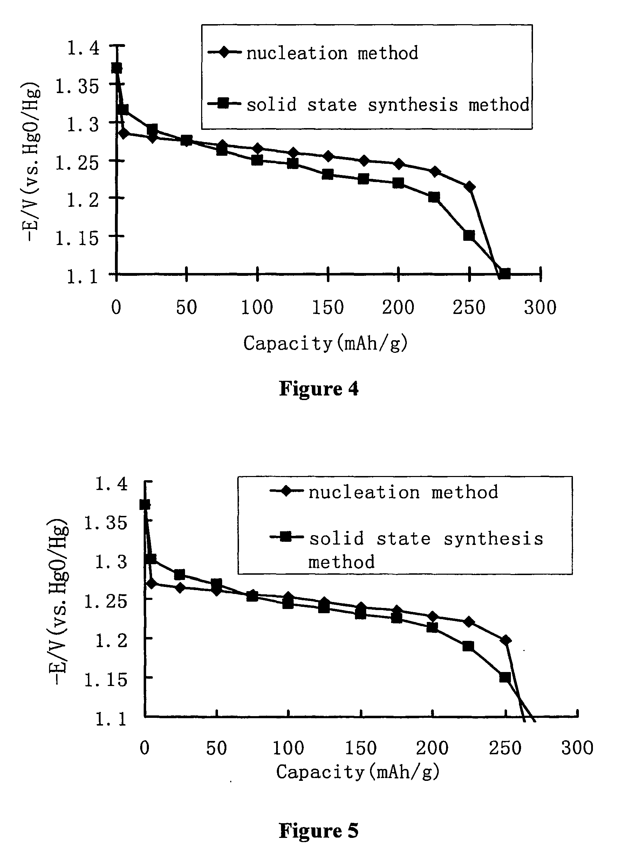

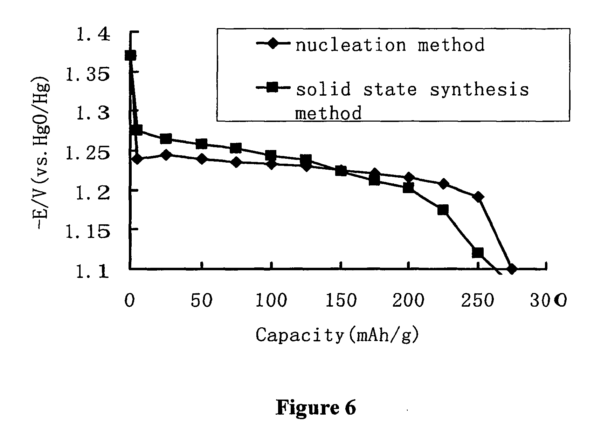

The discharge curves at 25°C of a zinc electrode fabricated using the nucleation methods of this invention and a zinc electrode using a solid synthesis method are shown in Figures 4, 5 and 6. Figure 4 shows discharge curves of the zinc electrodes for a current density of 150mA/g. Figure 5 shows discharge curves for a current density of 250mA/g. Figure 6 shows discharge curves for a current density of 500mA/g. These figures show that, at the same discharge current density, a zinc electrode that uses calcium zincate fabricated by a method of this invention has a distinctly more stable voltage platform in its discharge curve and a 15-20% larger discharge capacity than a zinc electrode that uses calcium zincate fabricated using a solid state synthesis method.

These test results show that the above described methods fabricate calcium zincate which, when used as the active material in zinc electrodes in batteries, produces batteries with improved performance. Therefore, calcium zincate fabricated by the methods of this invention is suitable for use to manufacture storage batteries that would discharge with high current and high power while having a stable power output.

## Claims

1. A method for fabricating calcium zincate, comprising the steps:
adding calcium zincate seeds to an alkaline solution; and mixing a calcium salt solution and a zinc salt solution with said alkaline solution to form calcium zincate, wherein the calcium salt in the calcium salt solution and the zinc salt in the zinc salt solution are hydro-soluble, the anions of the calcium salt in the calcium salt solution do not form a precipitate with the zinc ions in the zinc salt solution and the anions of the zinc salt solution do not form a precipitate with the calcium ions in the calcium salt solution."

2. The method for fabricating calcium zincate of claim 1 wherein the molar quantity of the calcium zincate seeds is between 0.5% and 20% of the molar quantity of the calcium in the calcium salt solution.

3. The method for fabricating calcium zincate of claim 1 wherein the average granule diameter of said calcium zincate seeds is between 0.1µm and 30µm.

4. The method for fabricating calcium zincate of claim 1 wherein the average granule diameter of said calcium zincate seeds is between 1 µm and 20µm.

5. The method for fabricating calcium zincate of claim 1 wherein the alkaline solution is a solution of one or more of sodium hydroxide, and potassium hydroxide.

6. The method for fabricating calcium zincate of claim 5 wherein the calcium salt in the calcium salt solution is one or more hydro-soluble calcium salts selected from the group consisting of: calcium chloride, calcium nitrate, and calcium acetate; and the zinc salt in the zinc salt solution is one or more water soluble zinc salts selected from the group consisting of: zinc chloride, zinc nitrate, and zinc acetate.

7. The method for fabricating calcium zincate of claim 1 wherein the molar ratio of the calcium in the calcium salt solution to the zinc in the zinc salt solution is Ca : Zn = I : (1.5 - 5).

8. The method for fabricating calcium zincate of claim 1 wherein the molar quantity of the hydroxyl ions (OH⁻) of said alkaline solution is between 5.5 times and 7.5 times the molar quantity of the calcium in the calcium salt solution.

9. The method for fabricating calcium zincate of claim 1 wherein in said mixing step, said calcium salt solution and said zinc salt solution are first mixed to form a solution mixture, then said solution mixture is added to said alkaline solution with said calcium zincate seeds.

10. The method for fabricating calcium zincate of claim 1 wherein, in the mixing step, the temperature of the alkaline solution with the added calcium salt solution and zinc salt solution is between 20°C and 95°C and the duration of adding the calcium salt solution and the zinc solution is between 10 minutes and 60 minutes.

## Patentansprüche

1. Verfahren zum Herstellen von Calciumzinkat, umfassend die Schritte: Hinzufügen von Calciumzinkat-Samen zu einer alkalischen Lösung; und Mischen einer Calciumsalzlösung und einer Zinksalzlösung mit der alkalischen Lösung zur Bildung von Calciumzinkat, wobei das Calciumsalz in der Calciumsalzlösung und das Zinksalz in der Zinksalzlösung hydrolöslich sind, wobei die Anionen des Calciumsalzes in der Calciumsalzlösung mit den Zinkionen in der Zinksalzlösung kein Präzipitat bilden, und wobei die Anionen der Zinksalzlösung mit den Calciumionen in der Calciumsalzlösung kein Präzipitat bilden.

2. Verfahren zum Herstellen von Calciumzinkat nach Anspruch 1, wobei die molare Menge der Calciumzinkat-Samen zwischen 0,5 % und 20 % der molaren Menge des Calciums in der Calciumsalzlösung ist.

3. Verfahren zum Herstellen von Calciumzinkat nach Anspruch 1, wobei der durchschnittliche Körnchendurchmesser der Calciumzinkat-Samen zwischen 0,1 µm und 30 µm liegt.

4. Verfahren zum Herstellen von Calciumzinkat nach Anspruch 1, wobei der durchschnittliche Körnchendurchmesser der Calciumzinkat-Samen zwischen 1 µm und 20 µm liegt.

5. Verfahren zum Herstellen von Calciumzinkat nach Anspruch 1, wobei die alkalische Lösung eine Lösung aus einem oder mehreren von Natriumhydroxid und Kaliumhydroxid ist.

6. Verfahren zum Herstellen von Calciumzinkat nach Anspruch 5, wobei das Calciumsalz in der Calciumsalzlösung ein oder mehrere hydrolösliche/s Calciumsalz/e ist, ausgewählt aus der Gruppe bestehend aus Calciumchlorid, Calciumnitrat und Calciumacetat; und wobei das Zinksalz in der Zinksalzlösung ein oder mehrere wasserlösliche/s Zinksalz/e ist, ausgewählt aus der Gruppe bestehend aus Zinkchlorid, Zinknitrat und Zinkacetat.

7. Verfahren zum Herstellen von Calciumzinkat nach Anspruch 1, wobei das molare Verhältnis des Calciums in der Calciumsalzlösung zum Zink in der Zinksalzlösung Ca:Zn = 1:(1,5 - 5) ist.

8. Verfahren zum Herstellen von Calciumzinkat nach Anspruch 1, wobei die molare Menge der Hydroxylionen (OH⁻) der alkalischen Lösung zwischen dem 5,5-Fachen und 7,5-Fachen der molaren Menge des Calciums in der Calciumsalzlösung liegt.

9. Verfahren zum Herstellen von Calciumzinkat nach Anspruch 1, wobei die Calciumsalzlösung und die Zinksalzlösung während des Mischschrittes zunächst vermischt werden, um eine Lösungsmischung zu bilden und danach die Lösungsmischung zur alkalischen Lösung mit den Calciumzinkat-Samen hinzugefügt wird.

10. Verfahren zum Herstellen von Calciumzinkat nach Anspruch 1, wobei die Temperatur der alkalischen Lösung mit der hinzugefügten Calciumsalzlösung und der hinzugefügten Zinksalzlösung während des Mischschrittes zwischen 20°C und 95°C beträgt und die Dauer der Zugabe der Calciumsalzlösung und der Zinksalzlösung zwischen 10 und 60 Minuten liegt.

## Revendications

1. Procédé de fabrication de zincate de calcium, comprenant les étapes consistant à :
ajouter un ensemencement de zincate de calcium à une solution alcaline ; et mélanger une solution de sel de calcium et une solution de sel de zinc avec ladite solution alcaline pour former du zincate de calcium, où le sel de calcium dans la solution de sel de calcium et le sel de zinc dans la solution de sel de zinc sont hydrosolubles, les anions du sel de calcium dans la solution de sel de calcium ne forment pas de précipité avec les ions zinc dans la solution de sel de zinc et les anions de la solution de sel de zinc ne forment pas de précipité avec les ions calcium dans la solution de sel de calcium.

2. Procédé de fabrication de zincate de calcium selon la revendication 1, dans lequel la quantité molaire d'ensemencement de zincate de calcium se situe entre 0,5% et 20% de la quantité molaire du calcium dans la solution de sel de calcium.

3. Procédé de fabrication de zincate de calcium selon la revendication 1, dans lequel le diamètre moyen des granules desdits ensemencements de zincate de calcium se situe entre 0,1 µm et 30 µm.

4. Procédé de fabrication de zincate de calcium selon la revendication 1, dans lequel le diamètre moyen des granules desdits ensemencements de zincate de calcium se situe entre 1 µm et 20 µm.

5. Procédé de fabrication de zincate de calcium selon la revendication 1, dans lequel la solution alcaline est une solution d'un ou plusieurs composés parmi l'hydroxyde de sodium et l'hydroxyde de potassium.

6. Procédé de fabrication de zincate de calcium selon la revendication 5, dans lequel le sel de calcium dans la solution de sel de calcium est un ou plusieurs sels de calcium hydrosolubles choisis dans le groupe comprenant : le chlorure de calcium, le nitrate de calcium et l'acétate de calcium ; et le sel de zinc dans la solution de sel de zinc est un ou plusieurs sels de zinc hydrosolubles choisis dans le groupe comprenant : le chlorure de zinc, le nitrate de zinc et l'acétate de zinc.

7. Procédé de fabrication de zincate de calcium selon la revendication 1, dans lequel le rapport molaire du calcium dans la solution de sel de calcium au zinc dans la solution de sel de zinc est Ca : Zn = 1: (1,5-5).

8. Procédé de fabrication de zincate de calcium selon la revendication 1, dans lequel la quantité molaire d'ions hydroxyle (OH⁻) de ladite solution alcaline se situe entre 5,5 fois et 7,5 fois la quantité molaire du calcium dans la solution de sel de calcium.

9. Procédé de fabrication de zincate de calcium selon la revendication 1, dans lequel à ladite étape de mélange, ladite solution de sel de calcium et ladite solution de sel de zinc sont tout d'abord mélangées pour former un mélange de solutions puis le mélange de solutions est ajouté à ladite solution alcaline avec lesdits ensemencements de zincate de calcium.

10. Procédé de fabrication de zincate de calcium selon la revendication 1, dans lequel, à l'étape de mélange, la température de la solution alcaline avec la solution de sel de calcium et la solution de sel de zinc ajoutées se situe entre 20° C et 95° C et la durée de l'addition de la solution de sel de calcium et de la solution de sel de zinc se situe entre 10 minutes et 60 minutes.
